# EUROPEAN PATENT APPLICATION

(11) **EP 2 085 131 A1**
(43) Date of publication of application: **05.08.2009**
(21) Application number: 09250193.1
(22) Date of filing: 26.01.2009
(51) Int. Cl.: B01D 46/24, C04B 38/00, B28B 11/00

(54) **Plugged honeycomb structure**

(30) Priority: 01.02.2008 JP 2008022923
(71) Applicant: NGK Insulators, Ltd., Nagoya-shi, Aichi 467-8530 (JP)
(72) Inventor: Ogura, Yutaka, Nagoya City Aichi-ken, 467-8530 (JP)
(74) Representative: Paget, Hugh Charles Edward

(57) **Abstract**

There is disclosed a plugged honeycomb structure in which cracks are not easily generated in partition walls during use as a DPF and during regeneration. A plugged honeycomb structure 40 has gaps 41 opened on the side of an end face 2b between each plugging portion 10 and partition walls 4.

## Description

### Background of the Invention and Related Art Statement

The present invention relates to a plugged honeycomb structure which is preferably used as a diesel particulate filter.

### 1. Description of the Related Art

To prevent environmental pollution and improve the environment, a filter is applied to a treatment of exhaust gas, and as the filter for the treatment of the exhaust gas, a plugged honeycomb structure is frequently used. For trapping and removing particulate matter (PM) (the matter detected as three components, that is, an organic solvent soluble component, soot and sulfate) contained in the exhaust gas from a diesel engine, for example, a diesel particulate filter (DPF) is incorporated and used in an exhaust gas system or the like of the diesel engine, and the plugged honeycomb structure is used as this DPF.

In a case where the plugged honeycomb structure is used as the DPF, it should be noted that, when the PM is trapped and removed (during use) and when the PM deposited in the structure is burnt and removed to eliminate the increase of a pressure loss due to the PM deposited in the structure with an elapse of time (during regeneration), a temperature easily non-uniformly rises, and a defect such as a crack is sometimes generated owing to thermal stress. Particularly, in recent years, the DPF has been enlarged. Therefore, the thermal stress generated during the use and during the regeneration increases more remarkably than before, and the frequency and degree of the generation of the defect based on the thermal stress become more serious.

On the other hand, there has been suggested a plugged honeycomb structure having a structure in which bonding faces of a plurality of honeycomb segments are integrally bonded to one another via a bonding material layer. In such a plugged honeycomb structure, the bonding material layer performs a cushion-material-like function of suppressing thermal expansion, and hence the thermal stress is relaxed. Moreover, when the segment structure is employed, a distance between a portion having a high temperature and a portion having a low temperature shortens, and a temperature gradient decreases. Therefore, the plugged honeycomb structure having the segment structure has an excellent performance that a defect such as the crack is not easily generated.

It is to be noted that any prior document is not present in which the same theme as that of the present invention described later or a similar theme has been solved.

### Summary of the Invention

On the other hand, when even the plugged honeycomb structure having the segment structure is used as the DPF, cracks are sometimes generated, and a problem to be solved by a further countermeasure is confronted. The present invention has been developed in view of such a situation and aims to provide a plugged honeycomb structure which is useful as a filter for exhaust gas, in particular, as a DPF which traps PM or the like in the exhaust gas from a diesel engine and in which any crack is not easily generated in partition walls during use and during regeneration.

As a result of investigation, it has been confirmed that a large number of cracks are generated especially in intersecting portions of the partition walls between plugging portions in end faces. As a result of research based on this fact, it has been supposed that a temperature rises most owing to burning of the PM during the regeneration especially in the vicinity of an outlet end face as the final end of the burning of the exhaust gas, hence the vicinity of the end face is deformed owing to thermal expansion, and tensile stress is generated in the end faces of the partition walls, thereby generating the cracks. It has been found out that the thermal expansion in the vicinity of the end face on the side of the exhaust gas outlet cannot sufficiently be absorbed only by the presence of a bonding material layer based on the employment of a segment structure with respect to a further demand for the improvement of a crack resistance. Moreover, as a result of a further research for a countermeasure, the present invention has been completed. Specifically, to achieve a purpose of the solution of the above problem, according to the present invention, a plugged honeycomb structure is provided as follows.

That is, first, according to the present invention, there is provided a plugged honeycomb structure comprising: a columnar honeycomb structure having porous partition walls to form a plurality of cells communicating between two end faces; and plugging portions plugging the cells in the end faces, wherein gaps opened on an end face side are disposed between the plugging portions and the partition walls of the honeycomb structure.

The plugged honeycomb structure of the present invention substantially has an outer shape of the honeycomb structure itself, and hence has a columnar shape. The plugged honeycomb structure of the present invention is securely plugged. On the assumption that the plugged honeycomb structure when used as a DPF exhibits a function of trapping PM and the like, cracks are not easily generated in the partition walls in the vicinity of each end face. In the plugged honeycomb structure of the present invention, the gaps are present between the plugging portions and the partition walls of the honeycomb structure, but the gaps are present only in the vicinity of the end face. On an inner side of the honeycomb structure, the plugging portions come in close contact with the partition walls of the honeycomb structure, and any gap is not present. Therefore, when the structure is used as the DPF, any PM or the like does not pass through the structure. The gaps are opened on the end face side. In other words, it can be said that the gaps are recessed portions formed in the end face (at a time when the end face is viewed).

The gaps do not always have to be present between the plugging portions and the partition walls of the honeycomb structure in the vicinity of the end face, and the plugging portions may come in close contact with the partition walls of the honeycomb structure in a part of the in the vicinity of the end face. In this case, each gap is divided into a plurality of gaps in one cell.

In the plugged honeycomb structure of the present invention, the above gaps preferably have widths of 0.1 mm or more and depths of 0.1 mm or more and 4 mm or less.

The gap widths are more preferably 0.3 mm or more. The gap depths are more preferably 1.0 mm or more and 4 mm or less.

The width of the gap in the plugged honeycomb structure of the present invention is a maximum distance between each plugging portion and each partition wall of the honeycomb structure along a line connecting the center of each cell (the center of the shape of the cell appearing on the end face) to the partition wall of the honeycomb structure in the end face. The distance between the plugging portion and the partition wall of the honeycomb structure in the vicinity of the end face is sometimes not constant, but even in this case, the width of the gap is specified. Moreover, the depth of the gap in the plugged honeycomb structure of the present invention is the maximum distance between the end face and the deepest portion of the gap in a direction parallel to a communicating direction in which the cells communicates between two end faces of the honeycomb structure (the central axis direction of the columnar honeycomb structure). As described above, the gaps are present only in the vicinity of each end face, but the depth of this gap indicates a vicinity degree (a range in which the gap is present from the end face).

In the plugged honeycomb structure of the present invention, when the length of each plugging portion is L, a ratio between the depth D of the gap and the length L of the plugging portion is preferably 2/3 or less. Moreover, adhesion length between the plugging portion and the partition wall is defined by a difference between the length L of the plugging portion and the depth D of the gap, but this difference (L-D) is preferably 2 mm or less. When the depth D of the gap is, for example, 4 mm, the length L of the plugging portion is preferably 6 mm or more. When such conditions are satisfied, an adhesion area is secured, adhesion strength between the partition wall and the plugging portion is maintained, and the falling-off of the plugging portion is not easily caused.

In the plugged honeycomb structure of the present invention, the cells appearing on a section perpendicular to the direction in which two end faces are connected to each other preferably have a polygonal or circular shape (sectional shape).

The polygonal sectional shape of each cell (simply referred to as the cell shape) is specifically a quadrangle, hexagon, octagon, or the like.

In the plugged honeycomb structure of the present invention, the plugging portions preferably protrude from the end faces.

There is not any special restriction on a configuration in which the plugging portions protrude from the end faces. The shape of the plugging portions protruding from the end faces is preferably a mountain-like shape or a protruding shape smoothly raised continuously from the shape of each plugging portion in each cell in the vicinity of each end face.

The plugged honeycomb structure of the present invention may or may not have a segment structure. In the segment structure, an effect of suppressing deformation due to thermal expansion is recognized. Therefore, the plugged honeycomb structure of the present invention more preferably employs the segment structure as compared with a case where the segment structure is not employed. As to the segment structure, the columnar honeycomb structure having the porous partition walls forming the plurality of cells communicating between two end faces is regarded as one honeycomb segment, and a plurality of honeycomb segments are combined and integrally joined to one another in a direction perpendicular to the cell communicating direction (the central axis direction of the columnar honeycomb segments).

In the plugged honeycomb structure of the present invention, the two end faces are generally constituted of an inlet end face as an fluid inlet side and an outlet end face as a fluid outlet side, and the plugged honeycomb structure of the present invention employs a configuration in which (openings of) predetermined cells of the plurality of cells communicating between the inlet end face and the outlet end face are plugged with the plugging portions in the inlet end face, while (the openings of) the remaining cells are plugged in the outlet end face, so that a zigzag pattern or a checkered pattern appears in the inlet and outlet end faces. Furthermore, in the plugged honeycomb structure of the present invention, (the openings of) the cells in the inlet end face have a size different from that of those in the outlet end face, and the inlet end face can have an open area ratio different from that of the outlet end face.

In the plugged honeycomb structure of the present invention, the gap widths and the gap depths are preferably constant in all the gaps. Moreover, when the plugged honeycomb structure of the present invention is used as the DPF, the PM in the DPF is burnt successively from the inlet end face side to the outlet end face side, and hence the temperature in the vicinity of the outlet end face as the final end of the burning rises most. It is supposed that in the corresponding portion, thermal expansion at a time when the PM is burnt increases. In consequence, it is possible to employ a configuration in which the gap widths and the gap depths are relatively increased near the center of the outlet end face as the fluid outlet side and are relatively decreased on an outer peripheral side of the end face. A configuration in which any gap is not provided on the inlet end face side as the fluid inlet side may be employed.

Next, according to the present invention, there is provided a diesel particulate filter (DPF) in which any one of the above plugged honeycomb structures is used.

Since the plugged honeycomb structure of the present invention has the gaps opened on the end face side between the plugging portions and the partition walls of the honeycomb structure, tensile stress generated in a case where a portion in the vicinity of the end face is expanded and deformed is relaxed, and any crack is not easily generated especially during regeneration at a time when the structure is used as the DPF. Specifically, it is supposed that especially during the regeneration of the DPF, high thermal stress generated by the burning of the PM increases especially in the vicinity of the outlet end face of the honeycomb structure and that the load of the tensile stress is generated in the intersections of the partition walls forming the cells, which results in the generation of the cracks. On the other hand, in the plugged honeycomb structure of the present invention, when the gaps opened on the end face side are provided between the plugging portions and the partition walls of the honeycomb structure, the tensile stress is relaxed, and the generation of the cracks is suppressed.

In the preferable configuration of the plugged honeycomb structure of the present invention, the gap widths are 0.1 mm or more, and the gap depths are 0.1 mm or more and 4 mm or less. Therefore, while obtaining the above crack preventing effect, a bonding strength between the plugging portions and the partition walls of the honeycomb structure in portions other than the gaps is sufficiently secured, and a defect that the plugging portions fall off from the structure used as the DPF is not easily generated.

In the preferable configuration of the plugged honeycomb structure of the present invention, the plugging portions protrude from the end faces. In a case where the plugging portions protrude from the end faces, as compared with a case where any portion does not protrude, a thermal capacity in the vicinity of each end face increases, and the deformation due to the thermal expansion in the vicinity of the end face during the regeneration does not easily occur. Moreover, as a result, the tensile stress to the partition wall in the end face is decreased, and any crack is not easily generated.

### Brief Description of the Drawings

Fig. 1 is a front view schematically showing one example of a plugged honeycomb structure;
Fig. 2 is a sectional view schematically showing one example of the plugged honeycomb structure;
Fig. 3 is a diagram schematically showing one example of a conventional plugged honeycomb structure and showing an end face thereof from the front side;
Fig. 4 is a diagram schematically showing one embodiment of a plugged honeycomb structure according to the present invention and showing an end face thereof from the front side;
Fig. 5 is a diagram showing one enlarged cell portion plugged with a plugging portion in Fig. 4;
Fig. 6 is a diagram showing the same part as Fig. 5 and is a sectional view cut along the AA line of Fig. 5, showing a section of a cell in a plane parallel to the central axis of the plugged honeycomb structure;
Fig. 7 is a diagram schematically showing another embodiment of the plugged honeycomb structure of the present invention and showing an end face thereof from the front side;
Fig. 8 is a diagram showing one enlarged cell portion plugged with a plugging portion in Fig. 7;
Fig. 9 is a diagram showing the same part as Fig. 8 and is a sectional view cut along the BB line of Fig. 8, showing a section of a cell in a plane parallel to the central axis of the plugged honeycomb structure;
Fig. 10 is a diagram schematically showing an embodiment of the plugged honeycomb structure of the present invention and showing an end face thereof from the front side;
Fig. 11 is a diagram showing one enlarged cell portion plugged with a plugging portion in Fig. 10;
Fig. 12 is a diagram showing the same part as Fig. 11 and is a sectional view cut along the CC line of Fig. 11, showing a section of a cell in a plane parallel to the central axis of the plugged honeycomb structure;
Fig. 13 is a diagram schematically showing an embodiment of the plugged honeycomb structure of the present invention and showing one enlarged cell portion plugged with a plugging portion in an end face of the structure from the front side; and
Fig. 14 is a diagram showing the same part as Fig. 13 and is a sectional view cut along the EE line of Fig. 13, showing a section of a cell in a plane parallel to the central axis of the plugged honeycomb structure. Description of Reference Numerals

1: plugged honeycomb structure
2a, 2b: end face
3: cell
3a: cell (plugged)
3b: cell (not plugged)
4: partition wall
10, 11: plugging portion
20: peripheral wall
30: (conventional) plugged honeycomb structure
31: crack
40, 70, 100, 130: plugged honeycomb structure (of the present invention)
41, 71, 101: gap
50: honeycomb structure

### Description of the Preferred Embodiment

Embodiments of the present invention will hereinafter be described appropriately with reference to the drawings, but the present invention should not be limited to these embodiments when interpreted. The present invention can variously be altered, modified, improved or replaced based on the knowledge of any person skilled in the art without departing from the scope of the present invention. For example, the drawings show the preferable embodiments of the present invention, but the present invention is not limited to any configuration or information shown in the drawings. To implement or verify the present invention, a means similar or equivalent to means described in the present specification can be applied, but a preferable means is as follows.

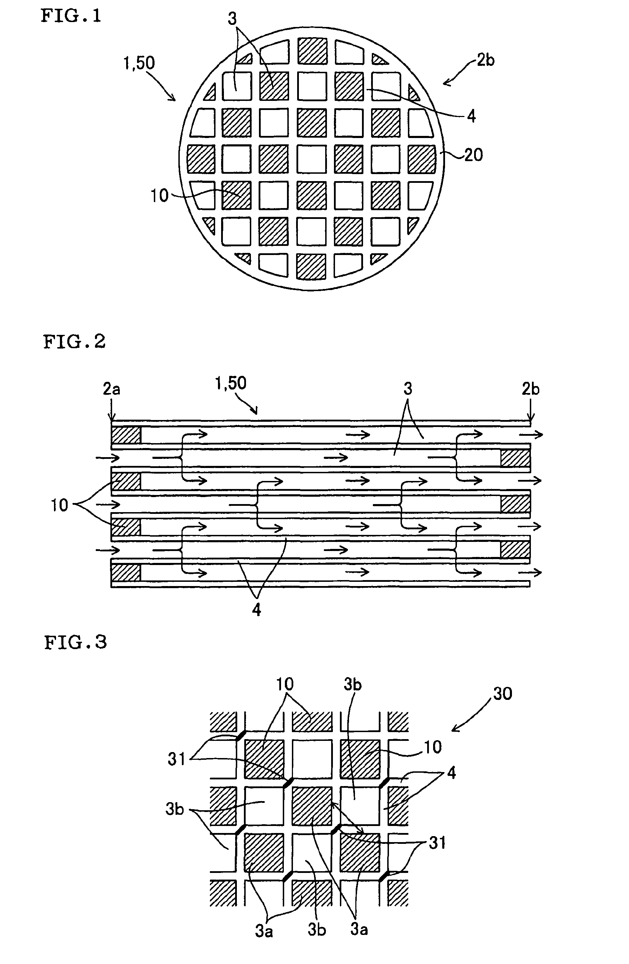

[Shape, Structure, Characteristics and Function of Plugged Honeycomb Structure] First, the shape, structure, characteristics and function of a plugged honeycomb structure including the plugged honeycomb structure of the present invention will be described. Fig. 1 is a front view schematically showing one example of the plugged honeycomb structure and is a diagram showing the end face of the plugged honeycomb structure having a columnar outer shape, and Fig. 2 is a sectional view schematically showing one example of the plugged honeycomb structure and is a diagram showing a section parallel to the central axis of the plugged honeycomb structure having the columnar outer shape.

A plugged honeycomb structure 1 shown in Figs. 1 and 2 is constituted of a honeycomb structure 50 having porous partition walls 4 (separating and) forming a plurality of cells 3 functioning as fluid flow paths in an inner space surrounded with an outer peripheral wall 20. In the structure are formed plugging portions 10 that plug end portions of the cells 3 in two end faces 2a, 2b of the plugged honeycomb structure 1.

The partition walls 4 are arranged so as to form the plurality of cells 3 communicating between two end faces 2a (an inlet end face) and 2b (an outlet end face), and the plugging portions 10 are arranged so as to plug each cell 3 in the end face 2a or 2b of the plugged honeycomb structure 1. The plugging portions 10 are present so as to plug opposite end portions of the adjacent cells 3 (e.g., the end portion of each cell 3 on one of the end faces 2a and 2b of the plugged honeycomb structure 1), and eventually the end faces of the plugged honeycomb structure 1 have a checkered pattern (a zigzag pattern) as shown in Fig. 1. Therefore, the end face 2a (the inlet end face) has an open area ratio equal to that of the end face 2b (the outlet end face).

When the plugged honeycomb structure 1 is used as a DPF, exhaust gas (fluid) flows into the opened cells 3 from the side of one end face 2a (the inlet end face), passes through the partition walls 4 as filter layers, is fed as the passed fluid into the cells 3 opening on the other end face 2b side, and is discharged from the other end face 2b (the outlet end face). When the exhaust gas passes through the partition walls 4, PM contained in the exhaust gas is trapped by the partition walls 4.

The cells 3 of the plugged honeycomb structure 1 have a density (a cell density) of preferably 15 cells/cm² or more and less than 65 cells/cm², and the partition walls 4 have a thickness of preferably 200 µm or more and less than 600 µm. When the structure is used as the DPF, a pressure loss generated by PM deposition is decreased as a filter area is large. Therefore, as the cell density is large, the pressure loss by the PM deposition lowers. On the other hand, when a cell hydraulic diameter is decreased, an initial pressure loss increases. Consequently, from a viewpoint of the decrease of the pressure loss by the PM deposition, the cell density is preferably large, but from a viewpoint of the decrease of the initial pressure loss, the cell density is preferably decreased. When the thicknesses of the partition walls 4 are increased, a trapping efficiency improves, but the initial pressure loss increases. When the initial pressure loss, the pressure loss by the PM deposition and the tradeoff of the trapping efficiency are taken into consideration, the above ranges of the cell density and partition wall thickness satisfy all requirements.

The thermal expansion coefficient of the plugged honeycomb structure 1 (the honeycomb structure 50) at 40 to 800°C in a communicating direction of the cells 3 is preferably less than 1.0×10⁻⁶/°C, further preferably less than 0.8×10⁻⁶/°C, especially preferably less than 0.5×10⁻⁶/°C. When the thermal expansion coefficient at 40 to 800°C in the cell communicating direction is less than 1.0×10⁻⁶/°C, a thermal stress generated in a case where the structure used as the DPF is exposed to high-temperature exhaust gas can be suppressed in an allowable range, and the structure is prevented from being broken due to the thermal stress.

As shown in Figs. 1 and 2, the whole shape of the plugged honeycomb structure 1 is a columnar (cylindrical) shape, and the shape of each cell 3 (the shape of a section of the cell 3 cut along a plane perpendicular to the communicating direction (the plane parallel to a diametric direction of the plugged honeycomb structure 1)) is a quadrangular shape. However, there is not any special restriction on the whole shape of the plugged honeycomb structure of the present invention and the cell shape. As the whole shape, for example, an elliptic pole-like shape, an oval pole-like shape, a quadrangular pole-like shape, a triangular pole-like shape or another polygonal pole-like shape may be employed, and as the cell shape, an octagonal shape, a hexagonal shape, a triangular shape or the like may be employed.

The outer peripheral wall 20 positioned in the outermost periphery of the plugged honeycomb structure 1 may be a formed integral wall formed integrally with portions constituted of the partition walls 4 upon manufacturing (upon forming), or a cement coated wall formed by grinding outer peripheries of the formed portions constituted of the partition walls 4 into a predetermined shape and forming an outer peripheral wall of a cement material or the like.

[Configuration of Generation of Cracks in Plugged Honeycomb Structure] Subsequently, one example of the configuration of the generation of cracks in a conventional plugged honeycomb structure will be described. Fig. 3 is a diagram schematically showing one example of the conventional plugged honeycomb structure and showing a part of an end face corresponding to that in Fig. 1.

In particular, during regeneration (in a case where a trapped PM is burnt and removed) of a conventional plugged honeycomb structure 30 used as a DPF, internal temperature rapidly rises, and the vicinity of an outlet end face (an end face corresponding to the end face 2b of Fig. 2) is thermally expanded to deform the structure. Moreover, the degree of the thermal expansion (the deformation) varies owing to the presence and absence of plugging portions 10. In consequence, tensile stress is generated in the intersections of partition walls 4 forming cells 3a plugged with the plugging portions 10 (in an arrow direction in Fig. 3), and cracks 31 to break the partition walls 4 are easily generated so as to extend through cells 3b that are not plugged.

[Characteristics of Plugged Honeycomb Structure according to the Invention] Next, characteristics of the plugged honeycomb structure of the present invention provided with gaps to prevent the above cracks from being generated will be described in accordance with embodiments. It is to be noted that the shape, structure, characteristics and function of the following embodiment of the plugged honeycomb structure of the present invention conform to those of the plugged honeycomb structure 1 except for the following respect.

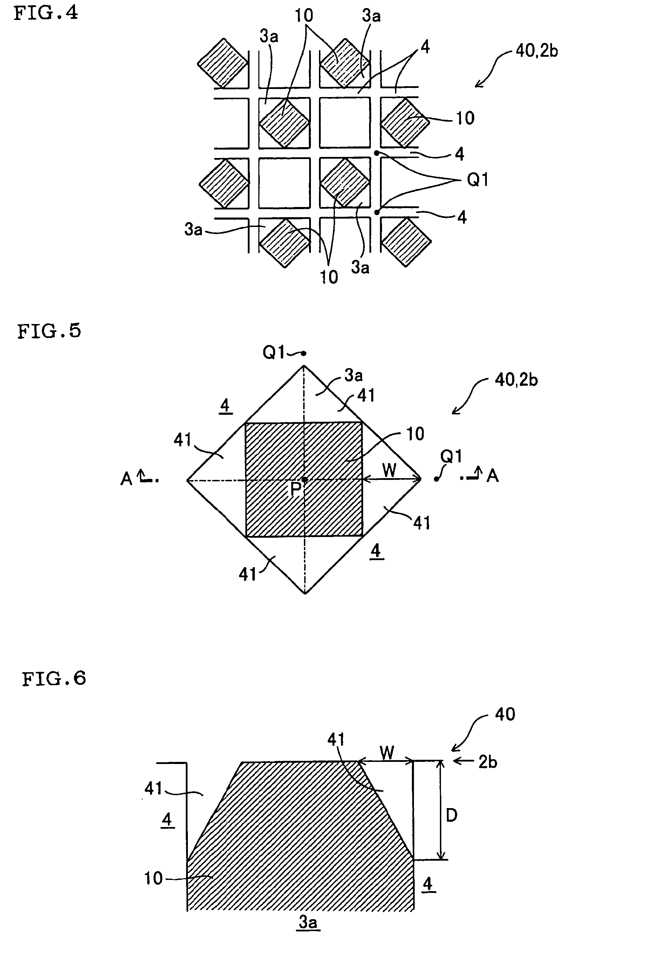

### (Embodiment 1) Figs. 4 to 6 are diagrams

schematically showing one embodiment of a plugged honeycomb structure of the present invention. Fig. 4 is a diagram showing a part of an end face and is a front view corresponding to Fig. 1. Fig. 5 is an enlarged diagram of a part of Fig. 4, showing a cell plugged with a plugging portion. Fig. 6 is a diagram showing the same part as Fig. 5 and is a sectional view cut along the AA line of Fig. 5, showing a section of a cell in a plane parallel to the central axis of the plugged honeycomb structure.

In a plugged honeycomb structure 40 shown in Figs. 4 to 6, cells have a quadrangular sectional shape. In this plugged honeycomb structure 40, cells 3a plugged with plugging portions 10 have gaps 41 between the plugging portions 10 and partition walls 4 (of the honeycomb structure).

As to the gaps 41 between each plugging portion 10 and the partition walls 4, a large gap is formed on the side of an intersection Q1 between the partition walls 4 where cracks are easily generated, and a distance between the plugging portion 10 and each partition wall 4 is maximized along a line connecting the center P of the cell 3a to the intersection Q1 of the partition walls 4 in an end face 2b. The gaps 41 in the end face 2b have a triangular (isosceles triangular) shape, and the plugging portions 10 in the end face 2b have a quadrangular (square) shape. The corners of this square shape of the plugging portion 10 come in contact with the partition walls 4 (see Fig. 5), and hence in one cell 3a, four gaps 41 are present in directions from the center P of the cell 3a to the intersections Q1 of four partition walls 4.

The gaps 41 open from the inner side of the plugged honeycomb structure 40 (the downside of Fig. 6) to the side of the end face 2b, and a depth D of each gap 41 defined by the maximum distance between the end face 2b and the deepest portion of the gap 41 is finite in a range of 0.1 mm or more and 4 mm or less. That is, the gaps 41 are present only in the vicinity of the end face 2b, and on the inner side of the plugged honeycomb structure 40, the plugging portions 10 come in close contact with the partition walls 4, and any gap is not present. In this plugged honeycomb structure 40, four gaps 41 have a constant depth D (see Fig. 6). Moreover, a width W of each gap 41 is a distance between the plugging portion 10 and the partition wall 4 along a line connecting the center P of the cell 3a to the intersection Q1 of the partition wall 4 in the end face 2b. This gap width W is 0.1 mm or more, and the four gaps 41 have a constant width W (see Fig. 5).

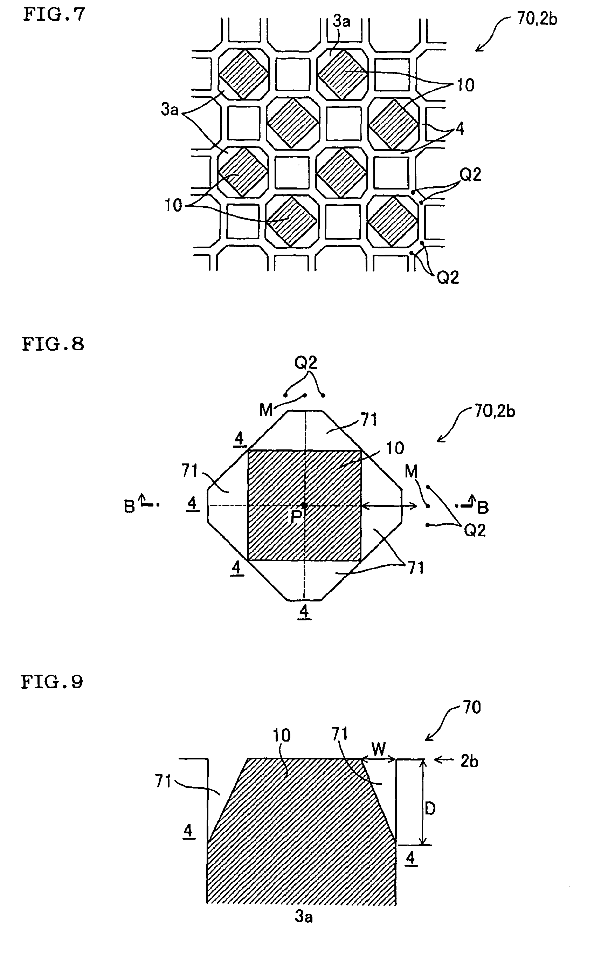

### (Embodiment 2) Figs. 7 to 9 are diagrams

schematically showing another embodiment of a plugged honeycomb structure of the present invention. Fig. 7 is a diagram showing a part of an end face and is a front view corresponding to Fig. 1. Fig. 8 is an enlarged diagram of a part of Fig. 7, showing a cell plugged with a plugging portion. Fig. 9 is a diagram showing the same part as Fig. 8 and is a sectional view cut along the BB line of Fig. 8, showing a section of a cell in a plane parallel to the central axis of the plugged honeycomb structure.

In a plugged honeycomb structure 70 shown in Figs. 7 to 9, cells have a quadrangular sectional shape and an octagonal sectional shape, and (openings of) the cells have different sizes. On the side of an end face 2b shown in Fig. 7, the octagonal cells are plugged, but on the side of an end face 2a (not shown, conforming to Fig. 2) opposite to the end face 2b, the quadrangular cells are plugged, so that the opposite end face 2a has an open area ratio larger than that of the end face 2b. In this plugged honeycomb structure 70, each octagonal cell 3a plugged with a plugging portion 10 on the side of the end face 2b has gaps 71 between the plugging portion 10 and partition walls 4 (of the honeycomb structure).

As to the gaps 71 between the plugging portion 10 and the partition walls 4, a large gap is formed on the side of an intersection Q2 between the partition walls 4 where cracks are easily generated, and a distance between the plugging portion 10 and each partition wall 4 is maximized along a line connecting the center P of the cell 3a to an intermediate point M between two intersections Q2 of the partition walls 4 close to each other in the end face 2b. The gaps 41 in the end face 2b have a trapezoidal shape, and the plugging portions 10 in the end face 2b have a quadrangular (square) shape. The corners of this square shape of the plugging portion 10 come in contact with the partition walls 4 (see Fig. 8), and hence in one cell 3a, four gaps 71 are present in directions from the center P of the cell 3a to the two intersections Q2 close to each other (among four present intersections) (or the intermediate point M between the two intersections).

The gaps 71 open from the inner side of the plugged honeycomb structure 70 (the downside of Fig. 9) to the side of the end face 2b, and a depth D of each gap 71 defined by the maximum distance between the end face 2b and the deepest portion of the gap 71 is finite in a range of 0.1 mm or more and 4 mm or less. That is, the gaps 71 are present only in the vicinity of the end face 2b, and on the inner side of the plugged honeycomb structure 70, the plugging portions 10 come in close contact with the partition walls 4, and any gap is not present. In this plugged honeycomb structure 70, four gaps 71 have a constant depth D (see Fig. 9). Moreover, a width W of each gap 71 is a distance between the plugging portion 10 and the partition wall 4 along a line connecting the center P of the cell 3a to the intermediate point M of the two intersections Q2 of the partition walls 4 close to each other in the end face 2b. This gap width W is 0.1 mm or more, and the four gaps 71 have a constant width W (see Fig. 8).

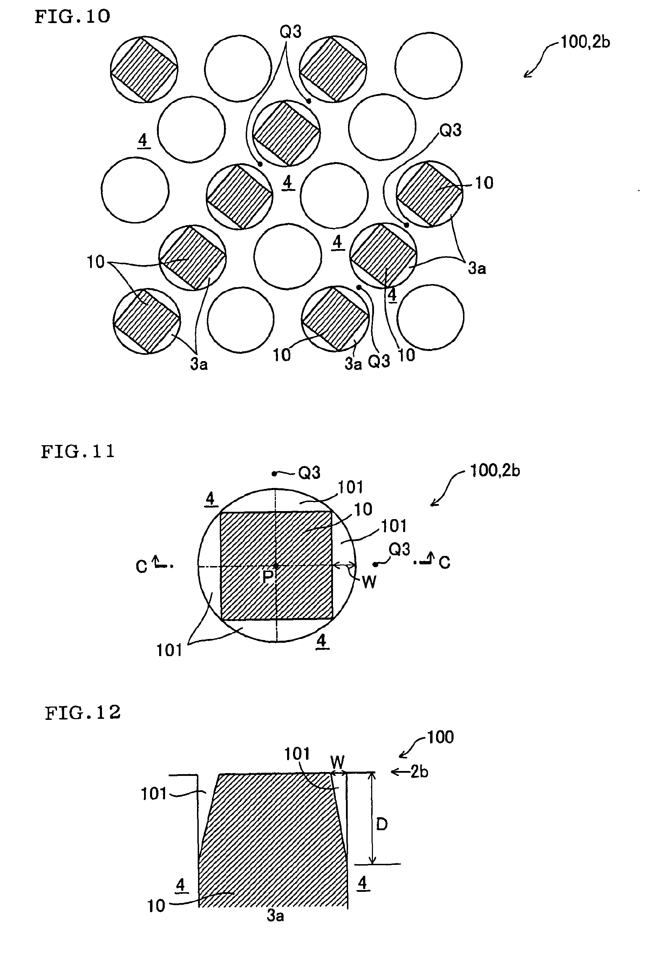

### (Embodiment 3) Figs. 10 to 12 are diagrams

schematically showing still another embodiment of a plugged honeycomb structure of the present invention. Fig. 10 is a diagram showing a part of an end face and is a front view corresponding to Fig. 1. Fig. 11 is an enlarged diagram of a part of Fig. 10, showing a cell plugged with a plugging portion. Fig. 12 is a diagram showing the same part as Fig. 11 and is a sectional view cut along the CC line of Fig. 11, showing a section of a cell in a plane parallel to the central axis of the plugged honeycomb structure.

In a plugged honeycomb structure 100 shown in Figs. 10 to 12, cells have a circular sectional shape. In this plugged honeycomb structure 100, each cell 3a plugged with a plugging portion 10 has gaps 101 between the plugging portion 10 and partition walls 4 (of a honeycomb structure).

As to the gaps 101 between the plugging portion 10 and the partition walls 4, a large gap is formed on the side of the narrowest point Q3 of each partition wall 4 where cracks are easily generated, and a distance between the plugging portion 10 and the partition wall 4 is maximized along a line connecting the center P of the cell 3a to the narrowest point Q3 of the partition wall 4 in an end face 2b. The gaps 101 in the end face 2b have an arched shape, and the plugging portions 10 in the end face 2b have a quadrangular (square) shape. The corners of this square shape of the plugging portion 10 come in contact with the partition walls 4 (see Fig. 11), and hence in one cell 3a, four gaps 101 are present in directions from the center P of the cell 3a to (four present) narrowest points Q3.

The gaps 101 open from the inner side of the plugged honeycomb structure 100 (the downside of Fig. 12) to the side of the end face 2b, and a depth D of each gap 101 defined by the maximum distance between the end face 2b and the deepest portion of the gap 101 is finite in a range of 0.1 mm or more and 4 mm or less. That is, the gaps 101 are present only in the vicinity of the end face 2b, and on the inner side of the plugged honeycomb structure 100, the plugging portions 10 come in close contact with the partition walls 4, and any gap is not present. In this plugged honeycomb structure 100, four gaps 101 have a constant depth D (see Fig. 12). Moreover, a width W of each gap 101 is a distance between the plugging portion 10 and the partition wall 4 along a line connecting the center P of the cell 3a to the narrowest point Q3 of the partition wall 4 in the end face 2b. This gap width W is 0.1 mm or more, and the four gaps 101 have a constant width W (see Fig. 12).

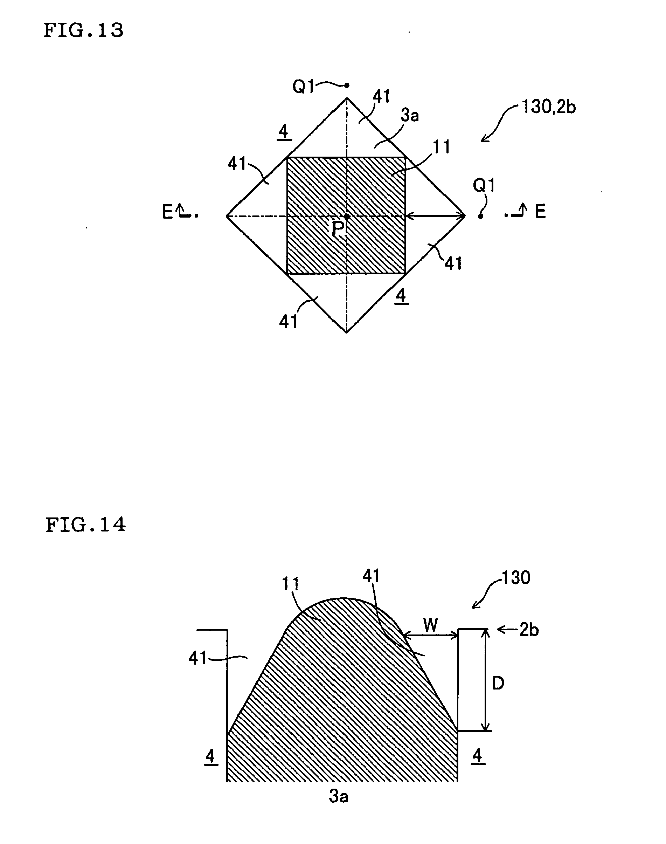

### (Embodiment 4) Figs. 13 and 14 are diagrams

schematically showing still another embodiment of a plugged honeycomb structure of the present invention. Fig. 13 is an enlarged diagram showing a part of an end face, showing a cell plugged with a plugging portion. Fig. 14 is a diagram showing the same part as Fig. 13 and is a sectional view cut along the EE line of Fig. 13, showing a section of a cell in a plane parallel to the central axis of the plugged honeycomb structure.

In a plugged honeycomb structure 130 shown in Figs. 13 and 14, a plugging portion 11 has a mountain-like shape smoothly raised continuously from a point where the plugging portion comes in contact with each partition wall 4 in a section where each gap 41 is formed (see Fig. 14), and protrudes from an end face 2b. The plugged honeycomb structure 130 has a configuration similar to that of the plugged honeycomb structure 40 except this respect, and hence description thereof is omitted.

[Manufacturing Method of Plugged Honeycomb Structure the Invention] Next, a method for manufacturing a plugged honeycomb structure of the present invention will be described. First, a honeycomb structure (or a honeycomb segment) which is not plugged is prepared, and as the preparing means, a conventionally known method may be used. As one example of this means, a binder, a pore former, a surfactant, water as a solvent and the like are added to a main material to form kneaded clay having plasticity, and this clay is extrusion-formed into a predetermined honeycomb shape. Afterward, the resultant formed article is dried with microwaves, hot air or the like and then fired. It is to be noted that the honeycomb structure may be fired before plugging cells (forming plugging portions) as described later or may be fired together with the plugging portions after plugging the cells.

As a method for plugging the cells, a conventionally known method may be used. As one example of the method, after attaching a sheet to an end face of the honeycomb structure, holes having sizes and positions adapted to a shape of the plugging portions to be formed are made in the sheet, and the end face of the honeycomb structure having the sheet attached thereto is immersed in plugging slurry of a slurried material of the plugging portions to fill the cells to be plugged with the plugging slurry through the holes made in the sheet. The resultant article is dried, fired and cured. When the holes are made in the sheet, if the portion to form a gap is not opened, the plugging slurry does not enter the cells, and the gaps can be formed.

A main material is a material constituting the honeycomb structure (partition walls) and, from the viewpoints of strength and thermal resistance, it is preferable to use at least one material selected from the group consisting of silicon carbide (SiC), a silicon-silicon carbide based composite material, silicon nitride, cordierite, mullite, alumina, spinel, a silicon carbide-cordierite based composite material, lithium aluminum silicate, aluminum titanate and an Fe-Cr-Al based metal. Above all, the material is especially preferably constituted of silicon carbide (SiC) or the silicon-silicon carbide based composite material. As the binder, methyl cellulose, hydroxypropoxyl cellulose, hydroxyethyl cellulose, carboxymethyl cellulose or polyvinyl alcohol may be used.

To decrease a thermal expansion difference between the material of the plugging portions and the honeycomb structure, the same material as that of the honeycomb structure is preferably used as the plugging portion material.

### [Examples]

Hereinafter, the present invention will be described in more detail in accordance with examples, but the present invention is not limited to these examples.

### (Example 1) [Preparation of Plugged Honeycomb

Structure] Silicon carbide powder and metal silicon powder were mixed at a mass ratio of 75:25, and methyl cellulose, hydroxypropoxyl methyl cellulose, a surfactant and water were added to this mixture, followed by kneading, to obtain kneaded clay having plasticity. Subsequently, the clay was extrusion-formed by using a predetermined mold to obtain a formed honeycomb article having a square cell shape and a columnar shape as the whole shape. Subsequently, the resultant formed honeycomb article was dried with a microwave drier and further completely dried with a hot air drier. Afterward, both end faces of the formed honeycomb article were cut into predetermined dimensions. Then, the end faces of the article were alternately masked in a checkered pattern (a zigzag pattern) with a sheet in which holes were made so as to form gaps between plugging portions and partition walls in cell openings in one end face of the formed honeycomb article, and the masked end face side was immersed in a plugging slurry containing silicon carbide to fill the cells corresponding to the holes with the plugging slurry. The other end face was masked with a sheet so that the cells which were not provided with the plugging portions in one end face corresponded to the holes made to form the gaps between the plugging portions and the partition walls, and the masked end face side was immersed in the plugging slurry containing silicon carbide to fill the cells corresponding to the holes with the plugging slurry. Afterward, the formed honeycomb article provided with the plugging slurry was dried with the hot air drier and further fired at 1410 to 1440°C for five hours to obtain a plugged honeycomb structure having a diameter of φ143.8 mm and a length of 152.4 mm (in a central axis direction). The resultant plugged honeycomb structure had a structure conforming to the plugged honeycomb structure 40 shown in Figs. 4 to 6, and had gaps, a square cell shape, a gap depth D of 0.1 mm and a gap width W of 0.1 mm.

[Regeneration Limit Test] A test was performed by using the structure as a DPF, an amount of soot to be deposited was successively increased, and the structure was regenerated to confirm a limit at which cracks were generated. Specifically, first a ceramic inexpansive material as a holding material was wound around the outer periphery of the resultant plugged honeycomb structure, and the structure was pushed into a canning can article made of SUS409, thereby obtaining a canning structure. Afterward, soot-containing burning gas generated by burning a diesel fuel light oil was fed into the plugged honeycomb structure from one end face thereof and discharged from the other end face to deposit the soot in the plugged honeycomb structure. Then, after once cooling the structure to room temperature, burning gas containing a predetermined ratio of oxygen at 680°C was fed into the plugged honeycomb structure from one end face thereof. When the pressure loss of the plugged honeycomb structure lowered, the flow rate of the burning gas was decreased to rapidly burn the soot. Afterward, the presence of the generation of the cracks in the plugged honeycomb structure was confirmed. This test was started from a deposited soot amount of 4 g/L, and repeatedly performed by increasing the amount as much as 1 g/L until the generation of the cracks was recognized. Moreover, this test was performed on three plugged honeycomb structures having the same specifications. Evaluation on each deposited soot amount was represented by a circle in a case where the generation of the cracks was not recognized after the test and was represented by a cross in a case where the generation of the cracks was recognized. The result of the evaluation is shown in Table 1 together with the gap depth D and the gap width W of the tested plugged honeycomb structure.

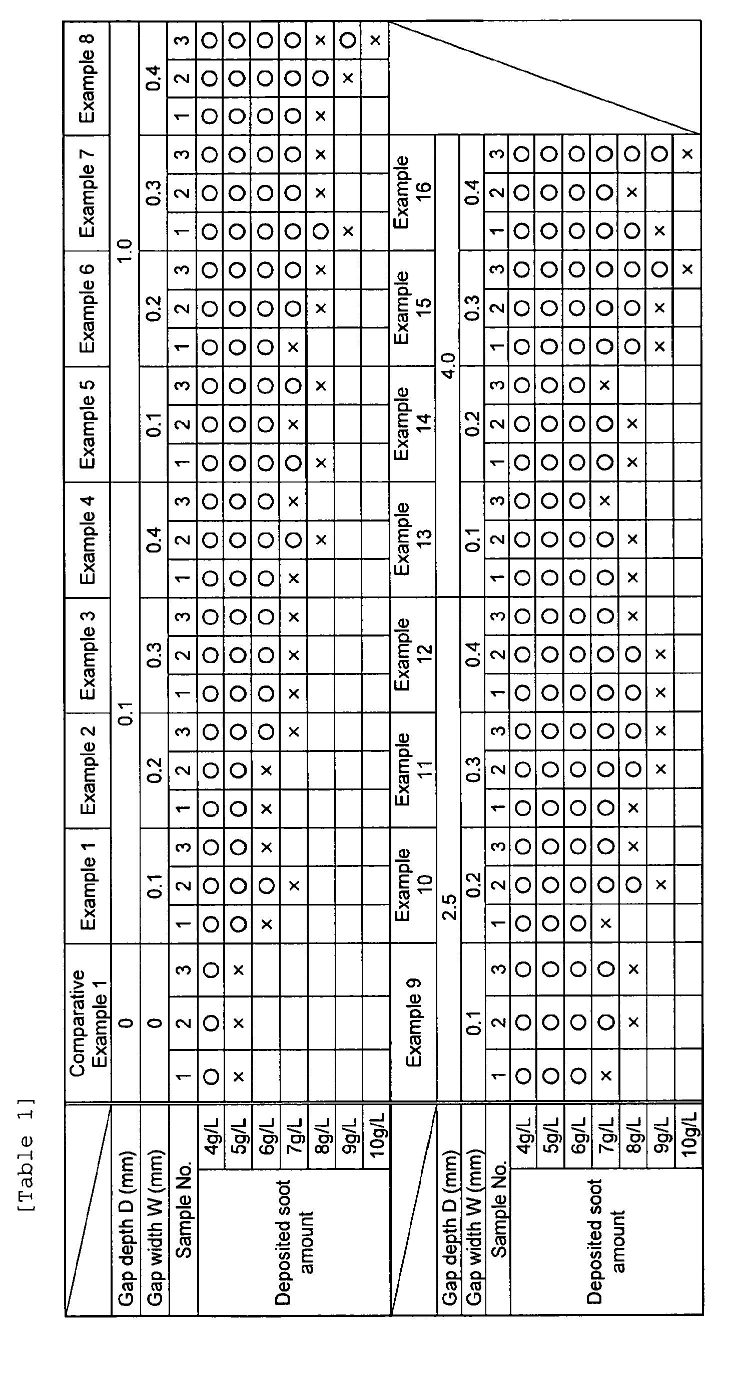

(Examples 2 to 16) Plugged honeycomb structures were prepared in the same manner as in Example 1 except that a gap depth D and/or a gap width W of each plugged honeycomb structure were/was changed and were subjected to a regeneration limit test. Evaluation results of deposited soot amount are shown in Table 1 together with the gap depths D and the gap widths W of the tested plugged honeycomb structures.

### (Comparative Example 1) Any gap was not formed in a

plugged honeycomb structure. Except for this respect, the plugged honeycomb structure was prepared in the same manner as in Example 1 and subjected to a regeneration limit test. Evaluation results of deposited soot amounts are shown in Table 1 together with a gap depth D and a gap width W of the tested plugged honeycomb structure.

### (Example 17) A plugged honeycomb structure had a

structure conforming to the plugged honeycomb structure 70 shown in Figs. 7 to 9 and had gaps, quadrangular and octagonal cell shapes and different cell (opening) sizes. Except for this respect, the plugged honeycomb structure was prepared in the same manner as in Example 1 and subjected to a regeneration limit test. Evaluation results of deposited soot amounts are shown in Table 2 together with a gap depth D and a gap width W of the tested plugged honeycomb structure.

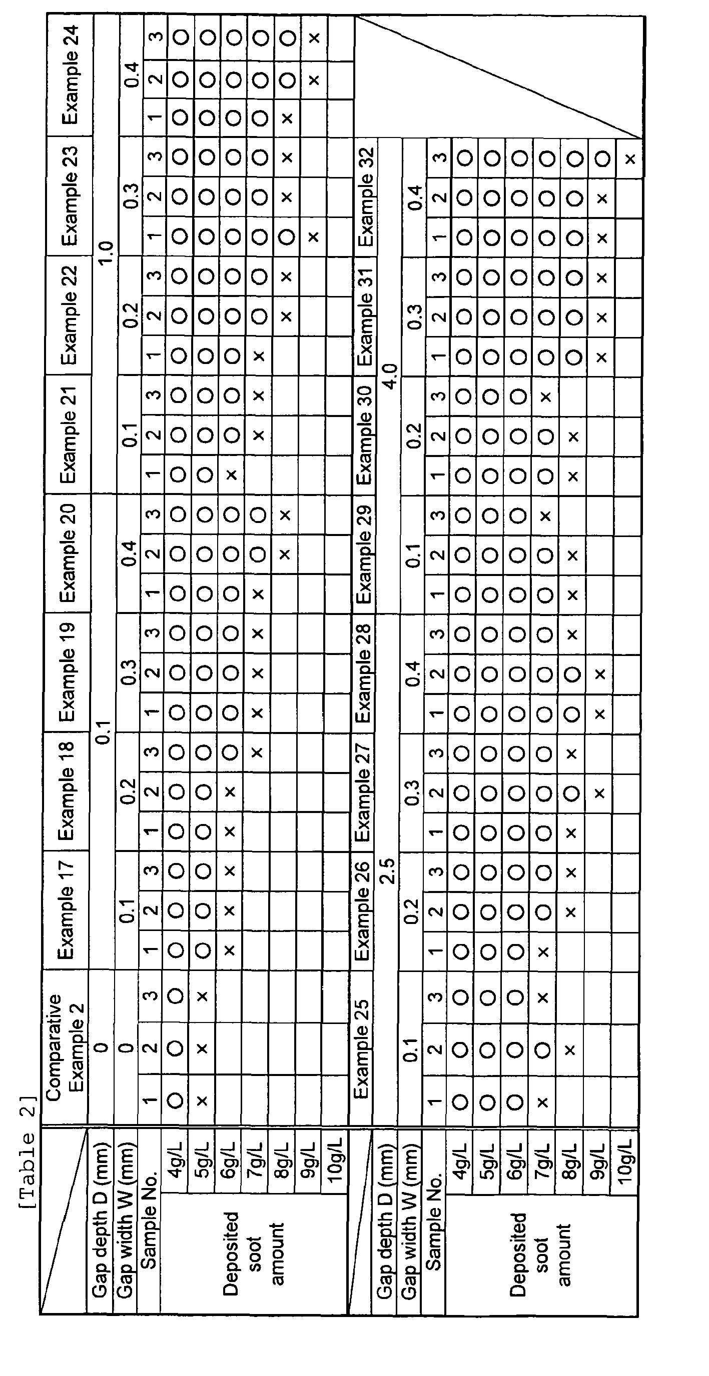

(Examples 18 to 32) Plugged honeycomb structures were prepared in the same manner as in Example 17 except that a gap depth D and/or a gap width W of each plugged honeycomb structure was changed and were subjected to a regeneration limit test. Evaluation results of deposited soot amounts are shown in Table 2 together with the gap depths D and the gap widths W of the tested plugged honeycomb structures.

### (Comparative Example 2) Any gap was not formed in a

plugged honeycomb structure. Except for this respect, the plugged honeycomb structure was prepared in the same manner as in Example 17 and subjected to a regeneration limit test. Evaluation results of deposited soot amounts are shown in Table 2 together with a gap depth D and a gap width W of the tested plugged honeycomb structure.

### (Example 33) A plugged honeycomb structure had a

structure conforming to the plugged honeycomb structure 100 shown in Figs. 10 to 12 and had gaps and a circular cell shape. Except for this respect, the plugged honeycomb structure was prepared in the same manner as in Example 1 and subjected to a regeneration limit test. Evaluation results of deposited soot amounts are shown in Table 3 together with a gap depth D and a gap width W of the tested plugged honeycomb structure.

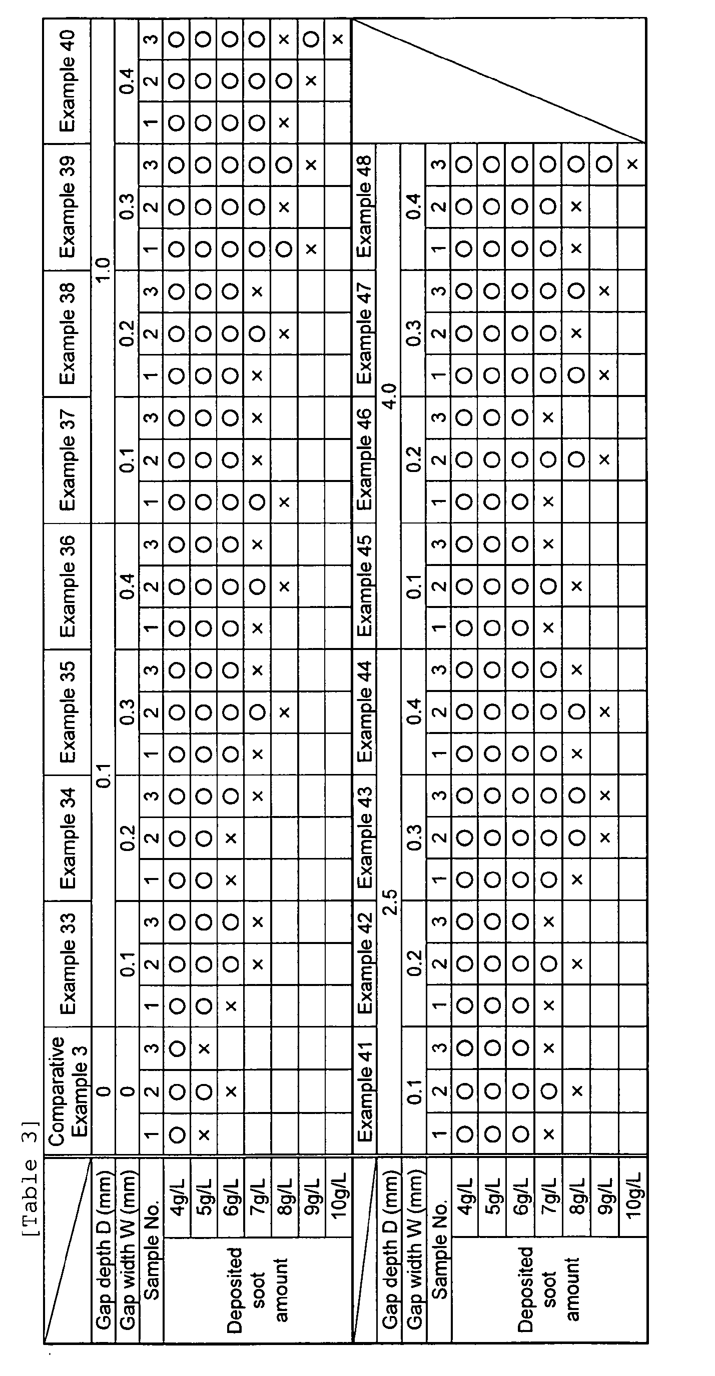

(Examples 34 to 48) Plugged honeycomb structures were prepared in the same manner as in Example 33 except that a gap depth D and/or a gap width W of each plugged honeycomb structure was changed and were subjected to a regeneration limit test. Evaluation results of deposited soot amounts are shown in Table 3 together with the gap depths D and the gap widths W of the tested plugged honeycomb structures.

### (Comparative Example 3) Any gap was not formed in a

plugged honeycomb structure. Except for this respect, the plugged honeycomb structure was prepared in the same manner as in Example 33 and subjected to a regeneration limit test. Evaluation results of deposited soot amounts are shown in Table 3 together with a gap depth D and a gap width W of the tested plugged honeycomb structure.

(Considerations) It is seen from the results of Examples 1 to 48 and Comparative Examples 1 to 3 shown in Tables 1 to 3 that when gaps are provided between plugging portions and partition walls, a large amount of soot is deposited until the cracks are generated. Generally in the structure used as the DPF, as the deposited soot amount is large, a large amount of heat is generated during the regeneration, and thermal expansion and resultant deformation in the vicinity of each end face of the plugged honeycomb structure tend to increase. Therefore, it is supposed that, as the deposited soot amount to generate the cracks by the regeneration limit test is large, a thermal shock resistance is high. Moreover, from this viewpoint, it is seen from the results of Examples 1 to 48 that, when the gap depth D is set to 0.1 mm or more and the gap width W is set to 0.1 mm or more, the thermal shock resistance preferably improves. Furthermore, when the gap depth D is equal and the gap width W is set to 0.3 mm or more, the thermal shock resistance preferably improves.

A plugged honeycomb structure of the present invention can preferably be used as a diesel particulate filter.

## Claims

1. A plugged honeycomb structure comprising:
a columnar honeycomb structure having porous partition walls to form a plurality of cells communicating between two end faces; and
plugging portions plugging the cells in the end faces,
wherein gaps opened on an end face side are disposed between the plugging portions and the partition walls of the honeycomb structure.

2. The plugged honeycomb structure according to claim 1, wherein the gaps have widths of 0.1 mm or more and depths of 0.1 mm or more and 4 mm or less.

3. The plugged honeycomb structure according to claim 1 or 2, wherein the plugging portions protrude from the end faces.

4. The plugged honeycomb structure according to any one of claims 1 to 3, wherein the cells in a section perpendicular to a direction in which the two end faces are connected to each other have a polygonal or circular shape.

5. A diesel particulate filter in which the plugged honeycomb structure according to any one of claims 1 to 4 is used.
